# EUROPEAN PATENT SPECIFICATION

(11) **EP 1 204 893 B1**
(45) Date of publication and mention of the grant of the patent: **18.12.2002**
(21) Application number: 00953288.8
(22) Date of filing: 15.08.2000
(51) Int. Cl.: G02B 27/10, G11B 7/135, G02B 27/00, G02B 5/18, G02B 5/32

(54) **THREE DIMENSIONAL IMAGING SYSTEM**
DREIDIMENSIONALE ABBILDUNGSVORRICHTUNG
SYSTEME D'IMAGERIE TRIDIMENSIONNELLE

(30) Priority: 18.08.1999 GB 9919497
(43) Date of publication of application: 15.05.2002
(73) Proprietor: QinetiQ Limited, London, SW1 6TD (GB)
(72) Inventor: GREENAWAY, Alan, Howard, Malvern, Worcs WR14 3PS (GB); BLANCHARD, Paul, Michael, Malvern, Worcs WR14 3PS (GB)
(74) Representative: Bowdery, Anthony Oliver
(86) International application number: GB0003085
(87) International publication number: WO01013159

(56) References cited:
- EP-A- 0 517 491
- US-A- 4 467 188
- US-A- 4 701 005
- US-A- 4 849 825
- US-A- 5 278 817
- US-A- 5 933 277

## Description

This invention relates to an optical system for producing multiple images of an object field, in which at least two images are produced simultaneously under different imaging conditions. The invention has applicability in fields including optical information storage, in vivo microscopy, ophthalmic optics, wavefront analysis and the imaging of three-dimensional object fields.

The use of a diffraction grating combined with an imaging lens to produce identical images of an object field in several diffraction orders is known. Phase-only gratings, amplitude-only gratings and phase and amplitude gratings may be used to change the fraction of the energy in each diffraction order and thus to vary the relative brightness of each identical image.

US4849825 and US5278817 both describe optical pick up systems for an optical disk system having a diffractive element to produce separate images. US5278817 uses the two images for tracking and focus control. US4467188 describes a beam splitter for producing multiple images and subjecting each to a different optical path length.

The imaging of a three-dimensional object using a 'through-focal series' is also known. By this method a sequence of images of the object are taken with the optical system focused on different planes in the object field. An alternative approach forms simultaneously a matrix of images recorded through a matrix of lenses, each of which provides a different focus condition.

A disadvantage of the 'through-focal series' is that because the images are recorded sequentially it is not suited to imaging the three-dimensional structure of dynamic processes. A disadvantage of the second approach is its complex design and that the resolution obtained is limited to the resolution delivered by the individual lenses in the array, the diameter of each of which (thus image resolution) is constrained by the space into which the array may be packed.

International patent application PCT 99/0065 8 describes another three-dimensional imaging system. However, a disadvantage of that system is that the optical transfer functions appropriate to the images formed in diffraction orders located symmetrically with respect to the undiffracted beam must suffer equal and opposite distortions compared to the beam in the zero order.

The storage of data in three dimensional, optically readable, storage media is also known (S Jutamulia and G M Stori, 'Three-Dimensional Optical Digital Memory', Optoelectronics -

Devices and Technologies Vol 10, No. 3, pp.343-360, *1995* and K Kobayashi and S S Kano, 'Multi-Layered Optical Storage with Nonlinear Read/Write', Optical Review, Vol 2, No 1, pp20-23, *1995*). These papers review the media and architecture for various three dimensional optical memories.

In a high performance, near diffraction limited optical system such as a compact disk player, all sources of wavefront aberrations must be considered. In a standard compact disk, the data layer is covered with a substrate several hundred microns thick. Propagation of light through this substrate (which is essentially a parallel plate) introduces spherical aberration, increasing the spot size on the data layer and degrading resolution. This effect is overcome in conventional, single layer, compact disk systems by building spherical aberration correction into the objective lens.

In a multi-layer optical data storage medium the degree of spherical aberration is dependent on the depth of the data layer below the surface, hence when reading from each distinct layer a different level of spherical aberration correction is required. An aberration-corrected objective lens is therefore not sufficient. Several patents on multi-layer optical data storage systems, which rely on a moving lens to focus at different depths, have suggested ways of performing 'active' spherical aberration correction. US 5202875 suggests using a stepped block of substrate material which is moved across the optical beam (using a voice coil motor) to a position dependent on the layer being read, such that the thickness of material that the beam passes through is constant. Other suggestions include a pair of prisms, one of which is translated, a rotating disk of variable thickness and movable compensation plates.

All of these approaches introduce additional moving parts and complexity into the system.

According to this invention, An apparatus for producing simultaneously a plurality of spatially separated images comprising: an optical system arranged to produce an image associated with a first optical transfer function; a diffraction grating arranged to produce, in concert with the optical system, images associated with each diffraction order, ancillary optical modules operating on individual diffraction orders and means for detecting the images, wherein the optical system and diffraction grating are located on an optical axis the diffraction grating is located in a suitable grating plane and the ancillary optical modules modify the optical transfer functions associated with the images characterised in that the optical system and diffraction grating are arranged such that a plurality of object planes are imaged and each image associated with a diffraction order corresponds to a different object plane.

The invention utilises a single lens or multiple lens system with a diffraction grating and ancillary optical modules to produce simultaneously a set of images of the object field in which each image in the set can correspond to an image of the object field recorded under different focus conditions but in which the full diameter of the lens system is exploited in each image in the set. For each image in the set, the full resolution and depth of field of the imaging means is exploited.

The ancillary optical modules contain optical elements which may also produce different amounts of spherical aberration in each diffraction order. This could be used to correct for spherical aberration in the associated optical system.

The grating used can be a single diffraction grating or a series of such gratings. The gratings used may be produced by computer-generated (digitised in space and/or in amplitude) or by analogue (e.g. interferometric) means.

The present invention allows for the optical transfer functions appropriate to the images formed in different diffraction orders to be independent of, identical with or correlated to the distortions applicable to any other diffraction order.

In the following descriptions detector means a detection means comprising a spatially-resolving system such as a pixellated array of detector elements e.g. a charge coupled device (CCD). For applications where detection of the presence or absence of unresolved targets is required, the detector may comprise suitably-positioned, isolated detector elements.

The invention will now be described with reference to the following figures in which:
figure 1(a) shows schematically an amplitude-only diffraction grating and figure 1(b) shows the normalised intensity cross-section of the zero, +1 and -1 diffraction order images of a point source produced when such a grating is used in an imaging system;
figure 2 shows schematically the use of a diffraction grating to produce multiple images of a single object.
figure 3 shows schematically the use of ancillary optical modules within each diffraction order of the optical system of figure 1.
figure 4 shows schematically a simple imaging system of the current invention used to produce in-focus images of different object planes at a single detector plane;
figure 5 shows schematically a simple imaging system of the current invention used to produce in-focus images of different object planes within an optical storage medium at different detector planes;
figure 6 shows schematically a simple imaging system of the current invention used to produce in-focus images of different object planes within an optical storage medium at a single detector plane.

Although the following examples relate to application of the invention in the field of optics, this should not be seen as limiting as the general principles of the invention are applicable to other wavelengths of electromagnetic radiation.

### Location of Components

A suitable grating plane would be any plane in which the beam cross-section spans at least 3 periods of the grating. The ancillary optical modules can be placed anywhere after the diffraction grating with the condition that each ancillary optical module intersects and operates on only one of the diffracted orders.

### Diffraction Grating

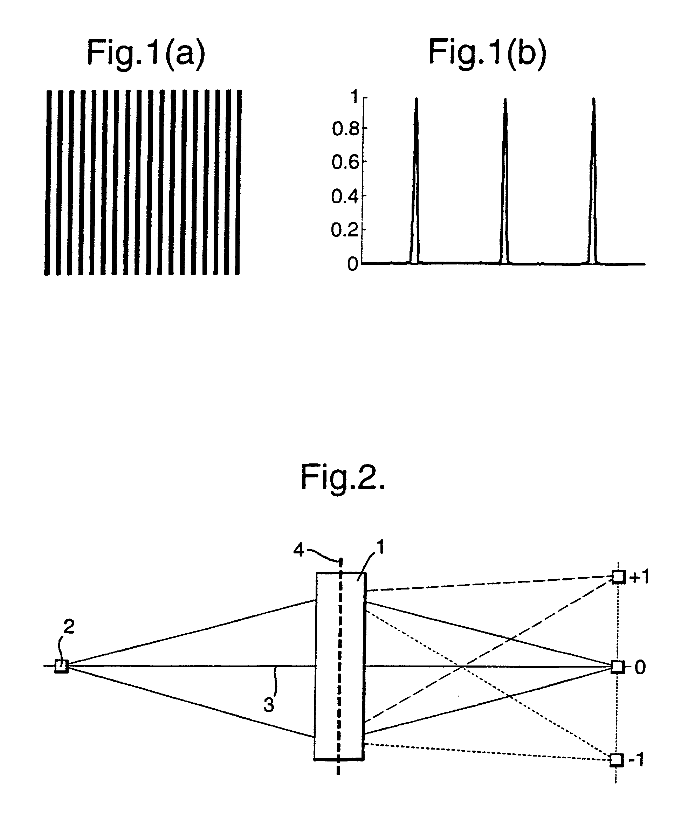

A standard diffraction grating consists of alternate regularly spaced strips of different transmissivity, reflectivity or optical thickness. When the grating is used within an imaging system, multiple diffraction orders appear in the image plane in addition to the unscattered zero order. Each diffraction order contains the same information about the object field as the zero order, though with different levels of intensity dependent on details of the grating construction. Figure 1 shows, as an example, an amplitude grating and the images of a point object formed in the -1, 0 and + 1 diffraction orders. (each order normalised to unit intensity)

### Phase Gratings

If an amplitude grating is used the zero order is always brighter than the +1, -1 and higher diffraction orders. The distribution of energy can be adjusted using a phase grating with two phase levels. For example, a phase step of π radians can completely eliminate the zero order, whilst putting more power into the +1 and -1 orders, or the phase step can be adjusted to 0.639π to place equal power into the 0, +1 and -1 orders. With crossed gratings the use of more phase steps or combined amplitude and phase gratings can be used to adjust the intensities of the multiple diffraction orders.

### The Invention

Referring to figure 2, an optical system (1), which may comprise a single lens or a multiple lens system, is designed to produce an in-focus image of an object (2) on the optical axis (3) in the normal focal plane. A diffraction grating (4) which is added to the optical system (1) produces additional images of the object (2) in the normal focal plane in its non-zero diffraction orders (+1 and-1 shown). The diffraction grating is here being used as a beam splitter.0

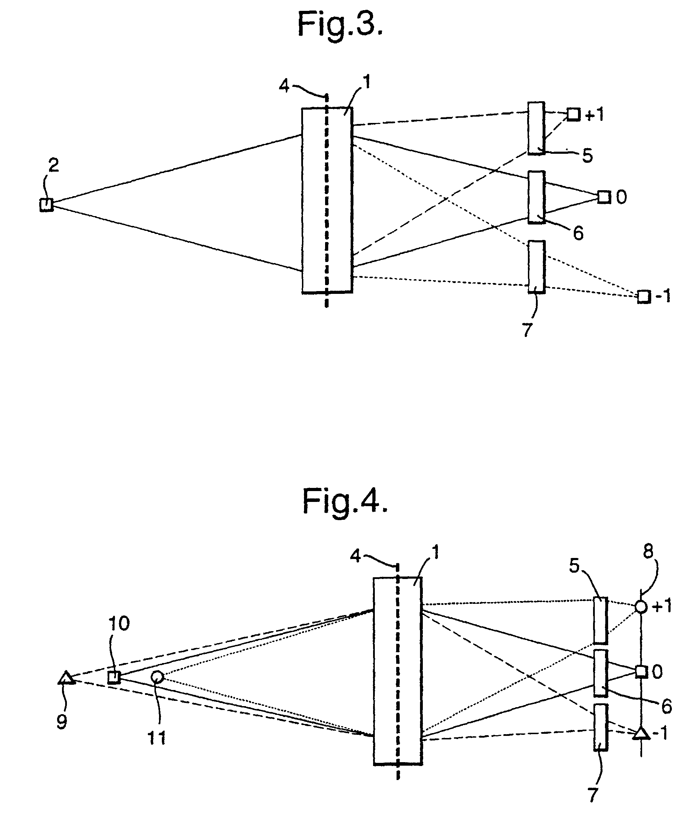

Referring to figure 3, ancillary optical modules (5, 6 and 7) are introduced into each diffraction order, such that each module acts to modify the optical transfer function (OTF) associated with a single diffraction order. Each ancillary optical module may modify the OTF in a different way and may consist of one or more lenses or other optical components. One or more diffraction orders may not contain an ancillary optical module.

### Use of Defocus-Only Ancillary Optical Modules

If the ancillary optical modules modify the OTF associated with each diffraction order such that each order undergoes an additional degree of defocus, then the images of the object (2) will occur in a different image plane in each diffraction order (figure 3). The position of the image plane in each diffraction order is determined by the properties of the optical system (1) and the ancillary optical module that intercepts light scattered into the diffraction order. An example of an optical element that will produce an additional degree of defocus is a lens.

The function of the optical arrangement shown in figure 3 can be considered in a different way, as shown in figure 4, where a single detector plane (8) is considered. Ancillary defocus-only optical modules (5, 6 and 7) are placed in the -1, 0 and +1 diffracted beams, such that the three images formed in each diffraction order at the detector plane (8) correspond to in-focus images of three different object planes 9, 10 and 11. The zero order will be the sum of the out-of-focus images of objects 9 and 11 and an in-focus image of object 10. If the degree of defocus is sufficient, a good image of object 10 will result. Similarly, objects 9 and 11 are discernible in the +1 and -1 diffraction orders. The system therefore generates, side-by-side, simultaneous images of three different object planes at a single detector plane. The separation of the object planes can be arbitrarily controlled through choice of suitable ancillary optical modules.

### Use of Spherical Aberration Ancillary Optical Modules

The ancillary optical modules can be designed to modify the OTF associated with each diffraction order such that each order undergoes an additional degree of spherical aberration (SA). An example of an optical element that will produce an additional degree of SA in a converging beam is a plane-parallel glass plate (J Braat, 'Analytical expressions for the wavefront aberration coefficients of a tilted plan-parallel plate', Applied Optics. Vol.36, No.32, 8459,1998).

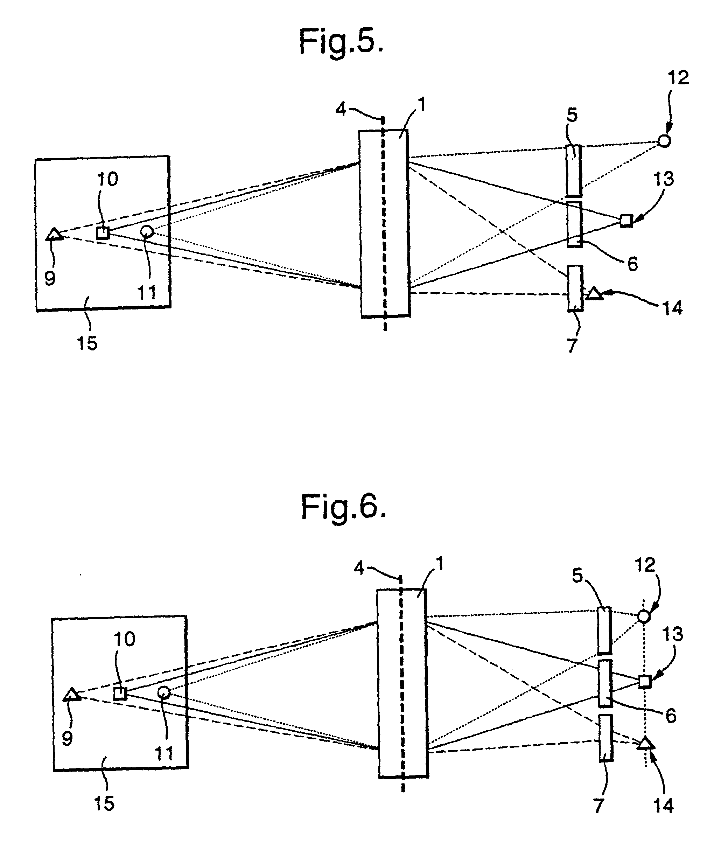

Referring to figure 5, the optical system (1) and diffraction grating (4) can be used to image different object planes (9, 10 and 11) onto detectors (12, 13 and 14) in different image planes. When the different object planes are within a substrate (15), SA is introduced by the propagation of light through the substrate, to a degree dependent on the thickness of substrate above each plane. This SA degrades the images to a different extent in each diffraction order. Ancillary spherical aberration-only optical modules (5, 6 and 7) can be used in each diffraction order to correct for the SA introduced by the substrate, allowing diffraction limited imaging of multiple object planes simultaneously, with the different detectors.

This technique can be used to read from multi-layer optical data storage media. Referring to figure 5, the storage medium 15 now comprises discrete optically readable planes 9, 10 and 11 having individual data storage elements (not shown) located thereon and is illuminated by means not shown. The elements could, for example, be an area of the plane in which a hole or pit is used to designate a logical 1 and the absence of a hole or pit is used to designate a logical 0. However, this example is not limiting: other embodiments are known to, or would be obvious to, persons skilled in the art including multi-level systems in which the elements may exist in more than the two states of a binary system.

The data storage elements are imaged simultaneously at detectors 12, 13 and 14. The detectors are capable of producing a signal dependent on the state of the storage element and could be a photodiode or a photo transistor. Ancillary optical modules 5, 6 and 7 are designed to correct for the spherical aberration associated with each data layer producing images of diffraction limited size on the detectors.

The optical system 1 may be designed to correct for the spherical aberration associated with one data layer in the storage medium. In this case, the diffraction order imaging that layer would not require ancillary SA correction optics. Optical modules in other orders would be designed such that the combination of SA correction introduced by the optical system (1) and by the ancillary optical modules (5, 6 and 7) would correct for SA introduced by the substrate.

In order to facilitate interrogation of different data elements within each plane, the apparatus includes means (not shown) for effecting relative movement, in a direction perpendicular to optical axis, between the storage medium 15 and the rest of the apparatus. Such, means might comprise an electromechanical arrangement known to a person skilled in the art.

### Use of Defocus and Spherical Aberration Ancillary optical modules.

By combining defocus and spherical aberration functions into each ancillary optical module (for example using a lens and parallel plate combination) multiple object layers can be imaged simultaneously onto a single image plane with automatic spherical aberration correction for each object layer.

For example, in figure 6, the ancillary optical modules (5, 6 and 7) combine SA correction and defocus correction such that the images of each data layer ( 9, 10 and 11) are formed in the same image plane. The data storage elements are imaged simultaneously at detectors 12, 13 and 14, which are in the same plane. The ancillary optical modules simultaneously correct for the spherical aberration associated with each data layer producing images of diffraction limited size in the detector plane.

## Claims

1. An apparatus for producing simultaneously a plurality of spatially separated images comprising:
an optical system (1) arranged to produce an image associated with a first optical transfer function;
a diffraction grating (4) arranged to produce, in concert with the optical system, images associated with each diffraction order,
ancillary optical modules (5, 6, 7) operating on individual diffraction orders and means for detecting the images,
wherein the optical system (1) and diffraction grating (4) are located on an optical axis the diffraction grating (4) is located in a suitable grating plane and the ancillary optical modules (5, 6, 7) modify the optical transfer functions associated with the images
**characterised in that** the optical system (1) and diffraction grating (4) are arranged such that a plurality of object planes (9, 10, 11) are imaged and each image associated with a diffraction order corresponds to a different object plane.

2. The apparatus of claim 1 where the ancillary optical modules generate different amounts of defocus in the images associated with each diffraction order.

3. The apparatus of claim 1 where the ancillary optical modules generate different amounts of spherical aberration in the images associated with each diffraction order.

4. The apparatus of claim 1 where the ancillary optical modules generate different amounts of defocus and spherical aberration in the images associated with each diffraction order.

5. The apparatus of claims 3 and 4 where the spherical aberration of images associated with each diffraction order is arranged to correct for spherical aberration associated with the different thickness of substantially parallel plates in object space.

6. An apparatus according to claim 1 whereby the diffraction grating comprises a set of two or more diffraction gratings designed such that the various diffraction orders are spatially separated.

7. An apparatus according to claim 1 whereby the diffraction grating is any one of an amplitude-only diffraction grating, a phase only diffraction grating or a phase and amplitude diffraction grating and any one of a reflective or a transmissive grating and any of these in which the grating lines are not plane parallel.

8. An apparatus according to claim 1 whereby the grating is a two-level (binary), a multi-level (digitised) or a continuous-level (analogue) structure.

9. The apparatus of claim 1 where each object plane contains an array of elements, capable of existing in at least two states and in which the detector means (12, 13, 14) is capable of distinguishing between said states.

10. An apparatus for reading data from a three dimensional optical storage medium wherein object planes are located within the medium comprising an apparatus according to claim 9 wherein the detecting means (12, 13, 14) is adapted to produce a signal dependent on the state of the elements.

## Revendications

1. Appareil pour produire simultanément une multitude d'images séparées dans l'espace, comprenant :
- un système optique (1) pour produire une image associée à une première fonction de transfert optique;
- une grille ou réseau de diffraction (4) disposée pour produire, de concert avec le système optique, des images associées à chaque ordre de diffraction;
- des modules optiques auxiliaires (5, 6, 7) agissant individuellement sur les ordres individuels de diffraction et des moyens pour la détection des images,
dans lequel le système optique (1) et la grille de diffraction (4) sont localisés sur l'axe optique, la grille de diffraction (4) se trouve dans un plan de grille approprié et les modules optiques auxiliaires (5, 6, 7) modifient les fonctions de transfert optiques associées aux images,
**caractérisé par le fait que** le système optique (1) et la grille de diffraction (4) sont disposés de sorte qu'une multitude de plans objets (9, 10, 11) crée des images et que chaque image associée à un ordre de diffraction corresponde à un plan objet différent.

2. Appareil selon la revendication 1 où les modules optiques auxiliaires produisent différentes défocalisations dans les images associées à chaque ordre de diffraction.

3. Appareil selon la revendication 1 où les modules optiques auxiliaires produisent différentes d'aberrations sphériques dans les images associées à chaque ordre de diffraction.

4. Appareil selon la revendication 1 où les modules optiques auxiliaires produisent à la fois différentes défocalisations et aberrations sphériques dans les images associées à chaque ordre de diffraction.

5. Appareil conformément aux revendications 3 et 4 où l'aberration sphérique des images associées à chaque ordre de diffraction est utilisée pour corriger l'aberration sphérique introduite par les différentes épaisseurs de matériaux à faces planes et parallèles situés dans l'espace objet.

6. Appareil selon la revendication 1 où la grille de diffraction comprend un jeu d'au moins deux réseaux de diffraction disposés de sorte que les divers ordres dé diffraction sont séparés dans l'espace.

7. Appareil selon la revendication 1 où la grille de diffraction est choisie parmi une grille diffractant exclusivement l'amplitude, une grille diffractant exclusivement la phase, ou une grille diffractant en même temps la phase et l'amplitude, et choisie parmi une grille réfléchissante ou une grille transparente ou une grille dont les lignes ne sont pas plan-parallèles.

8. Appareil selon la revendication 1 dans lequel la grille est une structure à deux niveaux (binaire) ,ou à plusieurs niveaux (numérisée) ou à niveaux continus (analogique).

9. Appareil selon la revendication 1 où chaque plan objet contient une matrice d'éléments, capables d'adopter au moins deux états et dans lequel les moyens de détection (12, 13, 14) sont capables de distinguer entre ces états.

10. Lecteur de données d'un média tridimensionnel de stockage optique où les plans objets sont localisés dans un média comprenant un appareil conformément à la revendication 9 dont les moyens de détection (12, 13, 14) sont adaptés pour produire des signaux en fonction des états des éléments de stockage.

## Patentansprüche

1. Vorrichtung zur gleichzeitigen Erzeugung mehrerer räumlich getrennter Bilder mit:
einem optischen System (1), das so beschaffen ist, daß es ein einer ersten optischen Übertragungsfunktion zugeordnetes Bild erzeugt;
einem Beugungsgitter (4), das so beschaffen ist, daß es zusammen mit dem optischen System jedem Beugungsgrad zugeordnete Bilder erzeugt;
zusätzlichen optischen Modulen (5, 6, 7), die mit individuellen Beugungsgraden arbeiten, und einer Einrichtung zur Erfassung der Bilder;
wobei das optische System (1) und das Beugungsgitter (4) auf einer optischen Achse angeordnet sind, das Beugungsgitter (4) auf einer geeigneten Gitterebene angeordnet ist und die zusätzlichen optischen Module (5, 6, 7) die den Bildern zugeordneten optischen Übertragungsfunktionen verändern;
**dadurch gekennzeichnet, daß** das optische System (1) und das Beugungsgatter (4) so beschaffen sind, daß mehrere Objektebenen (9, 10, 11) abgebildet werden und jedes einem Beugungsgrad zugeordnete Bild einer anderen Objektebene entspricht.

2. Vorrichtung nach Anspruch 1, bei der die zusätzlichen optischen Module unterschiedliche Grade an Defokussierung der jedem Beugungsgrad zugeordneten Bilder erzeugen.

3. Vorrichtung nach Anspruch 1, bei der die zusätzlichen optischen Module unterschiedliche Grade an sphärischer Abweichung in den jedem Beugungsgrad zugeordneten Bildern erzeugen.

4. Vorrichtung nach Anspruch 1, bei der die zusätzlichen optischen Module in den jedem Beugungsgrad zugeordneten Bildern unterschiedliche Grade an Defokussierung und sphärischer Abweichung erzeugen.

5. Vorrichtung nach den Ansprüchen 3 und 4, bei der die sphärische Abweichung von jedem Beugungsgrad zugeordneten Bildern so beschaffen ist, daß sie die den unterschiedlichen Dikken im wesentlichen paralleler Platten im Objektraum zugeordnete sphärische Abweichung korrigiert.

6. Vorrichtung nach Anspruch 1, bei der das Beugungsgitter einen Satz von zwei oder mehr Beugungsgittern umfaßt, die so konstruiert sind, daß die verschiedenen Beugungsgrade räumlich getrennt sind.

7. Vorrichtung nach Anspruch 1, bei der das Beugungsgitter entweder ein reines Amplitudenbeugungsgitter, ein reines Phasenbeugungsgitter oder ein Phasen- und Amplitudenbeugungsgitter und entweder ein reflektierendes oder ein durchlässiges Gitter ist, wobei keine der Gitterlinien ebenenparallel ist.

8. Vorrichtung nach Anspruch 1, bei der das Gitter eine zweischichtige (binäre), mehrschichtige (digitalisierte) oder durchgehende (analoge) Struktur ist.

9. Vorrichtung nach Anspruch 1, bei der jede Objektebene eine Anordnung von Elementen enthält, die so beschaffen sind, daß sie in mindestens zwei Zuständen existieren können, wobei die Erfassungseinrichtung (12, 13, 14) zwischen diesen Zuständen unterscheiden kann.

10. Vorrichtung zum Lesen von Daten aus einem dreidimensionalen optischen Speichermedium, wobei die Objektebenen in dem Medium angeordnet sind, das eine Vorrichtung nach Anspruch 9 umfaßt, und die Erfassungseinrichtung (12, 13, 14) so beschaffen ist, daß sie abhängig vom Zustand der Elemente ein Signal erzeugt.
